# EUROPEAN PATENT SPECIFICATION

(11) **EP 3 828 585 B1**
(45) Date of publication and mention of the grant of the patent: **23.08.2023**
(21) Application number: 19211530.1
(22) Date of filing: 26.11.2019
(51) Int. Cl.: G01S 7/02, G01S 13/931, G01S 13/34, G01S 13/86, G01S 13/87

(54) **VEHICLE CONTROL IN SEVERE RADAR INTERFERENCE CONDITIONS**
FAHRZEUGSTEUERUNG UNTER SCHWEREN RADARSTÖRUNGSBEDINGUNGEN
SYSTÈME DE CONTRÔLE POUR VÉHICULE DANS DES CONDITIONS D'INTERFÉRENCE RADAR IMPORTANTES

(43) Date of publication of application: 02.06.2021
(73) Proprietor: Arriver Software AB, 583 30 Linköping (SE)
(72) Inventor: Rydström, Mats, 447 37 Vårgårda (SE); Moss, Jonathan, 85716 Unterschleissheim (DE)
(74) Representative: Loveless, Ian Mark

(56) References cited:
- US-A1- 2016 291 130
- US-A1- 2017 234 967
- US-A1- 2019 041 492
- US-A1- 2019 057 263
- US-B1- 6 483 452

## Description

The present disclosure relates to interference in radar signals, and in particular to suppression of such interference. The radar systems discussed herein are suitable as vehicle radar systems.

A radar transceiver is a device arranged for transmission and reception of radar signals in a radar frequency band. Radar transceivers are commonly used in vehicles for monitoring vehicle surroundings. Automatic Cruise Control (ACC) functions, Emergency Braking (EB) functions, Advanced Driver Assistance Systems (ADAS) and Autonomous Drive (AD) are some examples of applications where radar data represents an important source of information on which vehicle control is based.

A well-known type of radar transmission format is the frequency modulated continuous wave (FMCW) format. This type of radar waveform comprises a 'chirp' signal of linearly increasing or decreasing frequency. FMCW radars may interfere with each other as frequency chirps cross or come close to each other in frequency. When this happens, a burst of interference somewhere within the received signal during one or more of the chirp signals can be observed. This problem becomes apparent when the received analogue signal has been converted to a digital baseband signal and typically is processed by the radar system using one or more Fast Fourier Transform (FFT) processing steps which converts signals in digital time domain into digital frequency domain signals.

If interference is present in one or more of the chirp signals, the noise floor will be raised since the noise may be spread across a wide band of frequencies. This raising of the noise floor has the effect of reducing the range and accuracy of the radar, which of course is undesirable.

EP3489710 A1 discloses an arrangement for radar interference suppression. Here, interference mitigation is achieved by replacing obtained radar samples by modified samples which are generated based on frequency domain processing of batches of samples.

However, there is a limit to how much interference that can be suppressed by replacing interfered radar samples by modified samples.

US 2017/0234967 A1 relates to radar sensors comprising mechanisms for interference mitigation. There is disclosed a method for interference mitigation which comprises determining predicted time domain samples and using the predicted time domain samples instead of the interfered samples in a type of repair operation.

US 2019/0041492 A1 discusses methods for interference detection, and also mentions transmitting a notification message to a control unit in a vehicle in response to detecting interference.

US 2016/0291130 A1 relates generally to interference detection in frequency modulated continuous wave radar systems. The detection methods are based on sub-band monitoring.

US 2019/0057263 A1 relates to sensor fusion techniques.

US 6,483,452 B1 describes a radar detecting apparatus which comprises a global positioning system (GPS) receiver. The GPS receiver is used to record geographical positions where radar interference waveforms are detected.

It is an object of the present disclosure to provide techniques for handling large amounts of interference.

This object is achieved by a method for suppressing interference in a radar signal received by a radar transceiver in a vehicle. The method comprises obtaining a sequence of time domain samples of the received radar signal and determining predicted time domain samples of the radar signal based on the obtained sequence of time domain samples. If interference is detected in an interfered subset of the sequence of time domain samples, the method replaces the interfered subset by corresponding predicted time domain samples to repair the obtained sequence of time domain samples, and transmits a notification to a control unit in the vehicle comprising information related to the replacing.

This way an amount of radar interference can be suppressed in an efficient and reliable manner by repairing obtained radar samples. In case interference is severe, the repair operation may not be able to suppress the entirety of the interference. However, the control unit is notified of the repair operation. This means that, in case interference is severe, the control unit may take action to adjust to the severe radar interference conditions. For instance, ACC and some ADAS functions may be disabled, and the driver notified of the challenging radar conditions. AD functions such as various emergency maneuvers may also be triggered by the notification.

The notification may comprise just an indication that repair has been performed, and/or more advanced data formats such as statistical measures of the detected interference.

According to aspects, the determining is based on filtering the obtained sequence of time domain samples by a Finite Impulse Response (FIR) filter defined by a vector of filter weights and/or by a frequency domain filter. The FIR filter is an efficient and reliable way to realize the repair operation.

According to aspects, the method also comprises updating one or more repair statistics related to the replacing. These repair statistics can be used to characterize interference conditions, which allows other higher layer control systems to adjust to the current interference conditions. The notification may comprise the one or more of the repair statistics, thereby informing the control unit of the current interference conditions.

According to aspects, the one or more repair statistics are related to an occurrence frequency of interference detections. Some higher layer applications and control processes in the vehicle, such as AD operation or ADAS systems, may be sensitive to frequently occurring bursts of interference. This type of repair statistic may therefore represent a valuable source of information to such higher layer control functions.

According to aspects, the one or more repair statistics are related to a time duration of the interfered subset. Some higher layer applications and control processes in the vehicle may be sensitive to extended duration bursts of interference. This type of repair statistic may therefore represent a valuable source of information to such higher layer control functions.

According to aspects, the one or more repair statistics are related to a prediction error or accuracy of the predicted time domain samples. The prediction error is normally indicative of how accurate the repair operation is. In this way, the control unit receives information related to how large impact that the interference has on the obtained radar samples after the repair operation. In case the prediction error is small, the repair operation can be expected to be relatively accurate, meaning that the effect of the interference is relatively minor. Vice versa, a larger prediction error is indicative of a less successful repair operation.

According to aspects, the method also comprises updating a sensor fusion parameter of the control unit based on the notification. This way the control unit may compensate for severe radar interference by temporarily placing more emphasis on other types of sensors, such as vision-based sensors and/or lidar-based sensors that are not affected by the radar interference. Also, the radar data can be more emphasized in relation to other information sources when interference conditions are more favorable.

According to aspects, the method comprises associating a physical location with the notification. Thus, advantageously, geographical locations associated with severe radar interference conditions can be identified. Vehicle control may then be adjusted based on the area which the vehicle currently traverses. For instance, an interference map indicating levels of interference associated with respective physical locations can be generated and shared via wireless communication link.

There are also disclosed herein control units, radar transceivers, radar systems, and vehicles associated with the above-mentioned advantages. The herein disclosed methods may be executed in a vehicle or at least in part by a remote server wirelessly connected to the vehicle.

### BRIEF DESCRIPTION OF THE DRAWINGS

The present disclosure will now be described more in detail with reference to the appended drawings, where:
Figure 1 shows a schematic top view of a vehicle;
Figure 2 shows an example of an FMCW chirp signal;
Figures 3A-C illustrate interference suppression in a radar signal;
Figure 4 is a flowchart illustrating methods according to the present disclosure;
Figure 5 shows an example control unit; and
Figure 6 shows an example computer program product.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

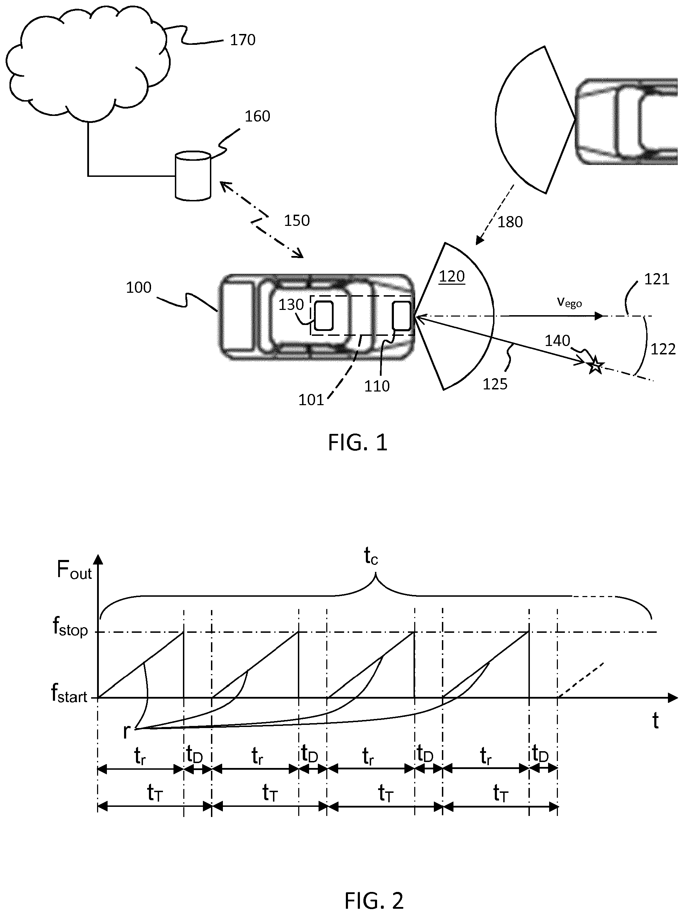

Figure 1 shows a vehicle 100 equipped with a vehicle radar system 101. The vehicle radar system comprises at least one vehicle radar transceiver 110 and a radar data processing system or control unit 130. Some vehicles may comprise a plurality of radar transceivers configured in connection to an antenna array.

The vehicle moves in a direction with velocity vector v_{ego}. According to an example, the vehicle radar system 101 comprises a radar transceiver arrangement 110 that is arranged for generating and transmitting radar signals in the form of frequency modulated continuous wave (FMCW) chirp signals, and to receive reflected radar signals 125, where the transmitted signals have been reflected by an object 140.

As exemplified in Figure 2, a transmitted FMCW signal is in the form of a continuous wave, or chirp, where the output frequency Fₒᵤₜ varies from a first frequency fₛₜₐᵣₜ to a second frequency fₛₜₒₚ over the course of a ramp r, where each signal comprises repeating cycles of a plurality of frequency ramps r. A cycle for such a chirp signal lasts for a certain cycle time t_{c}, each ramp r lasts a certain ramp time tᵣ, having a ramp period time t_{T}. Between two consecutive ramps of the chirp signal there is often a delay time t_{D}.

FMCW radar operation and signal processing is known in general and will not be discussed in more detail herein.

With reference to Figure 1, the radar data processing system 130 is arranged to control operation of the radar transceiver 110, and to obtain data from the radar transceiver 110, such as detections or data points corresponding to objects 140 in vicinity of the vehicle 100.

The radar transceiver 110 may comprise a single radar unit or a plurality of radar units, potentially of different type and/or of different configuration. The different radar units may, e.g., be arranged as front radars, side radars, and/or rearward facing radars.

According to an example, the vehicle radar system 110, 130 is arranged to generate a number of data points comprising coordinates in a relative coordinate system, i.e., relative to the location and orientation of the vehicle 100. The coordinates may be Cartesian coordinates, or they may be polar coordinates. The radar transceivers 110 may also be arranged to generate raw data for further processing, or a more refined feature vector extracted from the radar data. The data points may also comprise additional information, such as signal strength values or measures of signal-to-noise ratio (SNR).

One or more timestamps may be associated with the information passing between the vehicle radar transceiver 110 and the control unit 130. The time stamps may be assigned per data point or be common to a set of data points.

The radar transceiver 110 is associated with a field of view 120. In case the radar transceiver 110 is a front radar, a boresight direction 121 of the radar 110 often coincides with a center line of the field of view 120. In case the vehicle radar is instead configured as a side radar, then the boresight direction may point in some other angle compared to the forward direction of the vehicle 100.

The vehicle radar system 110, 130 in Figure 1 is subject to interference 180 from an external radar transceiver. Such interference can come from a plurality of different sources, including other radar transceivers on the same vehicle 100.

For an FMCW system, interference occurs when two or more radar signals are close together in frequency for a period of time, specifically within the intermediate frequency (IF) receiving bandwidth of each other or cross each other in frequency. The net effect is that the time domain signal, i.e., the raw data or digitally sampled signal obtained after frequency down-conversion of the received radio frequency signal, experiences a burst of interference, which may be high compared to the wanted radar-return signal. There may be multiple interference bursts within a short time window.

It is appreciated that the term "interference' is here to be interpreted broadly to comprise any signal component or signal comprised in the radar signal which has a detrimental effect on performance of a system making use of the received radar signal. Consequently, interference may comprise any of, e.g., external interference from other transmitters and radio frequency sources, internal interference from circuitry of the radar transceiver or other active components located close to the radar receiver, and in particular pulsed interference signals which are associated with limited time duration.

Vehicle radar systems are often associated with strict requirements on delay. This means that any signal processing performed om the received radar signal will operate under delay constraints. Thus, complex algorithms either require significant processing power in order to meet delay constraints or must be excluded due to the delay constraints.

The vehicle radar system 110,130 may be connected via wireless link 150 to a remote server 160, which in turn may be comprised in a remote network 170. This server and network may be configured to assist the vehicle 100 in performing radar interference suppression. For instance, the remote server 160 may be arranged to configure parameters such as detection thresholds used by the control unit 130 and the like remotely. An optional storage module may also be comprised in the vehicle radar system. The storage module may store data comprising information about a surrounding environment of the vehicle 100 and about past vehicle operations, such as past experiences of radar interference and radar interference suppression operations. The storage module will be discussed in more detail below in connection to Figure 7.

The radar interference suppression algorithms discussed herein mainly operate at baseband level, i.e., after down-conversion from the operational radio frequency. The techniques are based on the realization that interference generates bursts of distortion at baseband which can be detected. Once detected, the baseband signal can be repaired by prediction samples, which predict what the radar signal would have looked in case no interference was present. This prediction is made possible at least in part since the baseband signal is relatively narrowband and also often periodic, which means that it is correlated in time. Thus, a current sample of the radar signal can be efficiently approximated, at least to some degree, by a weighted combination of adjacent samples in the received signal. This weighted combination can be efficiently obtained from a filtering process operating on the received radar signal.

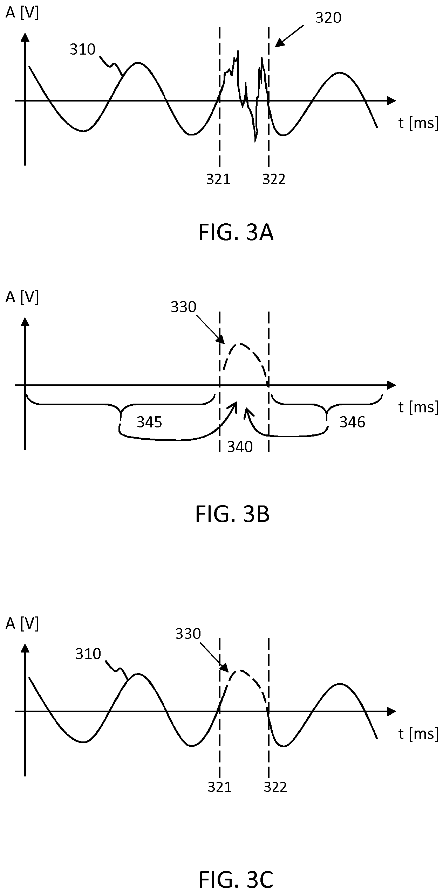

Figures 3A-3C show graphs of example baseband radar signal amplitude A over time in Volts, which illustrate the general idea behind the interference suppression methods disclosed herein. Figure 3A shows a received radar signal 310 at baseband. A part 320 of the received signal from time instant 321 to time instant 322 has been subject to interference. This interference will complicate object detection by, e.g., raising noise floor. It is desired to suppress this interference.

Since the received radar signal is narrow-band, it exhibits a degree of time correlation. It is therefore possible to 'predict' what it would have looked like based on a weighted combination of at least part of the received radar signal had the interference not been present. This prediction 330 is illustrated in Figure 3B. The prediction can be obtained, e.g., as a weighted combination 340 of the received radar signal outside 345, 346 of the interfered section 320.

This way, if interference is detected in some time domain sample or samples of the received radar signal, the distorted section 320 can be replaced by the prediction 330, as illustrated in Figure 3C. This way distortion can be suppressed in an efficient and reliable manner, which is an objective of the herein disclosed techniques.

Onset of interference may, e.g., be detected based on a difference between the current time domain sample and a previous time domain sample. A very large difference is indicative of interference. By observing this easily computed difference, an efficient yet robust method for detecting presence of interference is provided.

As long as interference is relatively scarce and of limited time duration, this repair technique is expected to suppress interference in an accurate manner. However, a consequence of this type of repair technique is that the repaired signal will not correspond exactly to the radar signal as it would have looked like without interference. In case of severe interference, the repair technique may not be very accurate, since the prediction will be based on a relatively small number of non-interfered radar samples. This may cause problems in higher layer processes of the control unit 130 which use the radar data for vehicle control, e.g., Automatic Cruise Control (ACC) functions, Emergency Braking (EB) functions, Advanced Driver Assistance Systems (ADAS) and Autonomous Drive (AD).

The present disclosure accounts for this by transmitting a notification to the control unit 130 in the vehicle 100 comprising information related to the replacement of radar samples by predicted radar samples. This informs the higher layer processes of the fact that the radar data has been interfered, and that a repair operation has been performed. A control unit 130 having access to more than one type of sensor data may then adjust its control of the vehicle to place more emphasis on other types of sensor data, such as data from a vision-based sensor, in case it is notified of severe interference. Some functions, such as ACC and certain types of ADAS systems may also be inactivated in response to detecting severe interference conditions where the repair methods are not expected to perform satisfactorily.

In case the vehicle 100 is configured for autonomous operation, or semi-autonomous operation, the notification can be used to trigger an emergency maneuver, such as maneuvering the vehicle to a safe location and bringing the vehicle to a halt. The notification can also be used to limit maximum vehicle speed and increasing safety margins in general.

To summarize, the radar system 101 shown in Figure 1 is arranged to obtain a sequence of time domain samples 310 of the received radar signal 125 by the radar transceiver 110. The time domain samples may, e.g., be obtained directly from an analog to digital converter (ADC) or after some type of filtering operation. The system 101 then determines predicted time domain samples 330 of the radar signal based on the obtained sequence of time domain samples 310. This predicting may be performed by the radar transceiver 110 or by a combination of the radar transceiver and the control unit 130. The remote server 160 may also be involved in the process.

If interference 180 is detected in an interfered subset 321, 322 of the sequence of time domain samples 310, the control unit 130 or the radar transceiver 110 replaces the interfered subset 321, 322 by corresponding predicted time domain samples 330 to repair the obtained sequence of time domain samples. The radar transceiver 110 then transmits a notification to the control unit 130 in the vehicle 100 comprising information related to the replacing, thereby making the control unit 130 aware of the interference conditions which are currently experienced.

It is appreciated that the different operations can be performed in the radar transceiver 110 or in the control unit 130, or in both the radar transceiver 110 and the control unit 130. However, most operations are preferably located in the radar transceiver, thereby providing a transparent interference suppression mechanism which the control unit 130 need not be involved in. The control unit 130 then only receives radar data, such as detection lists and the like, which have been based on processing of repaired obtained radar samples. The control unit 130 is also at the same time aware of any repair operations which have taken place and may therefore adjust its various operations to account for the current interference scenario.

After each repair operation, i.e., after each replacement of interfered radar samples by predicted radar samples, repair statistics may be gathered in order to quantify the interference. These statistics may be stored locally, or they can be uploaded to the remote server 160, or onwards to the remote network 170, where they can be used to, e.g., monitor radar interference conditions over different geographical areas.

Repair statistics which may be of interest comprise, e.g., the frequency at which interference bursts are detected, i.e., how often the radar signal is interfered, and the time duration of the interference burst, i.e., the time period from interference onset to cessation.

Notably, the generation of the prediction signal can be performed in a particularly efficient manner based on a weighted combination of time domain samples before and/or after the interfered section 345. This weighted combination may be realized by a finite impulse response filter (FIR). The weighted combination may also be implemented as a frequency domain filter, where a Fourier transform is first made, followed by reduction of some particularly interfered frequency sub-bands, and the inverse-transform back to time domain, as described in EP3489710 A1.

Thus, according to aspects, determining the predicted time domain samples is based on filtering the sequence of time domain samples by a Finite Impulse Response (FIR) filter defined by a vector of filter weights. The FIR filter allows for a particularly efficient digital implementation with low complexity and low processing delay. The FIR filter can be either a fixed filter with pre-configured filtering function or an adaptive filter which adapts to current filtering conditions based on an error signal. A gradient descent based method can be used to update filter weights. This method provides a computationally expensive yet accurate way to determine suitable filter weights. Alternatively, the filter design can be based on some autoregressive model, and the filter weights can be updated based on, e.g., the Burg method.

According to other aspects, determining the predicted time domain sample is based on filtering the sequence of time domain samples by a Kalman filter associated with a Kalman gain factor K and an estimated covariance matrix P. The Kalman filter is adaptive in that it adapts to current filtering conditions, without need for manually set thresholds and the like, which is an advantage.

According to further aspects, the method also comprises determining an error based on a difference between the predicted time domain samples and the obtained time domain samples when no interference is detected. Filtering the sequence of time domain samples may comprise updating filter weights based on the determined error. The filter can be adapted such as to minimize the error, thereby learning a model of what the received radar signal should look like in case no interference is present. The error can also be used to drive a Kalman filtering algorithm as mentioned above, or a gradient descent method for updating filter weights of an adaptive FIR filter or the like. This error also indicates how accurate the prediction is and may therefore represent a useful piece of information to the higher layer processes in the control unit 130. This will be discussed in more detail below. This error signal indicates how accurate the predicted radar samples are. The error signal therefore represents an interesting and valuable repair statistic which may be transmitted to the control unit 130, and perhaps also to the remote server 160 and/or to the remote network 170.

Interference in an obtained radar signal may, as noted above, be detected by observing differences between consecutive samples in the obtained radar signal. A large difference is indicative of an onset of interference. The interference can then, e.g., be assumed to persist for a pre-determined duration of time. Alternatively, a cessation of interference can be detected based on observing differences between consecutive samples in the obtained radar signal in reverse order, i.e., backwards. However, according to other aspects, interference is detected based on a difference between the predicted time domain samples and the obtained time domain samples. This is, under some circumstances, a more reliable method for detecting interference compared to, e.g., observing differences between consecutive samples in the obtained radar signal. A large error signifies a model mismatch in the filtering process, which is often due to the presence of interference. Thus, a more reliable method for detecting interference in a sequence of radar samples is provided.

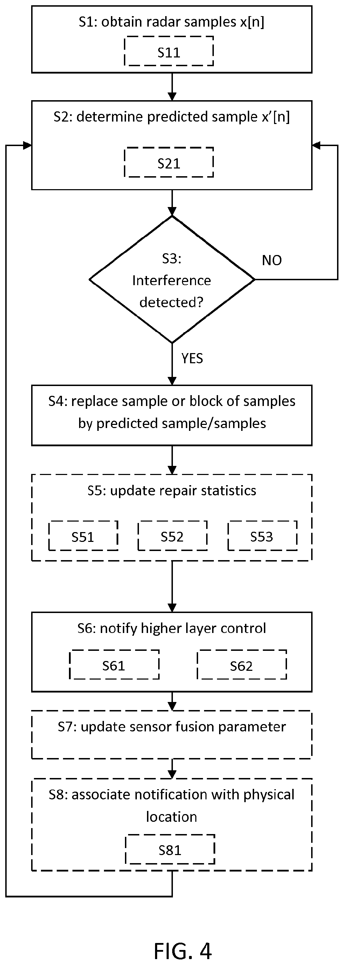

Figure 4 shows a flow chart illustrating details of the methods discussed above in connection to Figures 1-3. There is shown a method for suppressing interference 180 in a radar signal 125 received by a radar transceiver 110 in a vehicle 100. The method comprises obtaining S1 a sequence of time domain samples 310 of the received radar signal 125. This sequence of time domain samples may, e.g. be time domain samples of the received radar signal obtained S11 from an analog to digital converter (ADC) arranged to convert an analog baseband radar signal into discrete time domain samples of the radar signal. This means that the herein disclosed methods of interference suppression can be realized in a transparent way directly on the output from the ADC, without modification to other radar signal processing steps. Still, the higher layer processes and applications run by the control unit 130 is still made aware of the potential reduction in radar signal detection accurate resulting from the interference.

The method also comprises determining S2 predicted time domain samples 330 of the radar signal based on the obtained sequence of time domain samples 310. The determining operation was discussed above in connection to, e.g., Figures 3A-3C.

If interference 180 is detected S3 in an interfered subset 321, 322 of the sequence of time domain samples 310, then the method replaces S4 the interfered subset 321, 322 by corresponding predicted time domain samples 330 to repair the obtained sequence of time domain samples. Effectively, this means that the interference is hidden or covered by the prediction. However, as noted above, the prediction may not be exact in the sense that it exactly represents what the received radar signal would have looked like without interference. Rather, the prediction may be associated with an error. Thus, in order to allow higher layer processes and functions to adjust to the presence of interference, the method comprises transmitting S6 a notification to a control unit 130 in the vehicle 100 comprising information related to the replacing.

As discussed in connection to Figures 3A-C, the determining of the predicted time domain samples may be based on filtering S21 the obtained sequence of time domain samples 310 by a Finite Impulse Response (FIR) filter defined by a vector of filter weights and/or by a frequency domain filter.

In a basic implementation of the disclosed methods, the notification only comprises an indication S62 that repair has been performed. This way the control unit 130 is made aware of the fact that the radar transceiver 110 has detected interference and tried to cover it up by repairing the radar signal before passing it on for further processing, such as range and Doppler Fourier transform processing, target tracking, and target classification. The control unit 130 is then able to adjust its processing to the fact that radar detection results may not be as reliable as they are when not interfered. According to some aspects, in case of two or more frequency bands and/or center frequencies being used, the notification comprises information regarding which frequency band and/or center frequency that has been subject to repair.

As discussed above, the radar transceiver 110 and/or the control unit 130 may also maintain one or more repair statistics related to the replacing of obtained radar samples by predicted radar samples. A repair statistic captures characteristics of the operating environment in terms of, e.g., interference severity. The repair statistics can then be transmitted to the control unit 130, which may adapt its processing to account for the current interference scenario. Thus, according to some aspects, the method comprises updating S5 one or more repair statistics related to the replacing. Transmitting (S6) a notification to the control unit 130 may then comprise transmitting S61 the repair statistics to the control unit 130.

The one or more repair statistics may, e.g., be related to an occurrence frequency of interference detections S51. This type of statistics may for instance be a value indicating how many occurrences of interference that have been detected over a given time interval, such as a radar frame time duration t_{c}. The occurrence frequency of interference detections may also be a rate having units of interference bursts per second or the like.

The one or more repair statistics may also be related to a time duration S52 of the interfered subset 321, 322. For instance, the statistic may be reported as the time duration for each detected interference burst, or an average time duration of interference burst detected over a radar frame t_{c}.

With reference to the discussion above regarding adaptive filtering based on an error signal to generate the predicted radar samples, the one or more repair statistics may be related to a prediction error or accuracy S53 of the predicted time domain samples 330. This type of repair statistic indicates how accurate the repair operation or operations have been, i.e., what effect the interference has had on the radar signal after replacing the interfered subset by corresponding predicted time domain samples to repair the obtained sequence of time domain samples.

The control unit 130 may be part of a vehicle control system which bases vehicle control on sensor data other than the data obtained by the radar transceiver 110. This other sensor data may, e.g., comprise data from other radar sensors, from vision-based sensors, and/or from lidar-based sensors. The control unit 130 may build a more accurate perception of the surrounding environment by fusing the sensor data from the different sensor systems. Sensor fusion processing comprising weighting the different input data to form a common representation of the environment. Optionally, the method comprises updating S7 a sensor fusion parameter of the control unit 130 based on the notification. For instance, suppose a notification is received by the control unit 130 comprising data indicating that interference is severe, and that multiple repairs have been made to the obtained radar samples in a given time period. The control unit 130 may then adjust its sensor fusion operations to place more emphasis on other sensor types, such as the vision-based sensor and/or the lidar-based sensor.

The radar system, or the remote server 160, may also build an `interference map', by associating S8 a physical location with the notification. This spatial interference representation indicates radar interference conditions over some geographical area. The association between interference conditions and physical location may be used to warn other vehicles approaching an area with relatively high interference, enabling the control units in the other vehicles to prepare for a reduced radar system performance. For instance, an ACC system may request the driver to assume control, since radar operation may not be trustworthy in an upcoming stretch of road. According to some aspects, the vehicle radar system 110,130 is adapted to more or less continuously upload a current interference map to the remote server 160, or onwards to the remote network 170. If several vehicles upload their corresponding current interference map during their travel, a detailed and constantly updated interference map with a relatively large coverage will be acquired. By means of such a map, possible interference can be taken into account well in advance. Thus, according to some aspects, the method comprises generating S81 an interference map indicating levels of interference associated with respective physical locations.

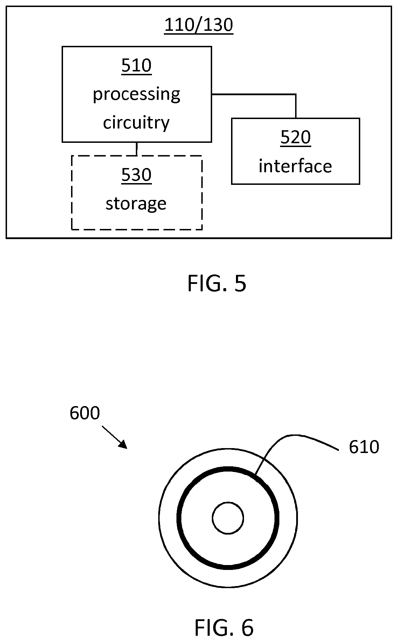

Figure 5 schematically illustrates, in terms of a number of functional units, the components of the control unit 110 according to an embodiment. Processing circuitry 510 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 530. The processing circuitry 510 may further be provided as at least one application specific integrated circuit (ASIC), or field programmable gate array (FPGA).

Particularly, the processing circuitry 510 is configured to cause the control unit 110 to perform a set of operations, or steps. These operations, or steps, were discussed above in connection to Figure 5. For example, the storage medium 530 may store the set of operations, and the processing circuitry 510 may be configured to retrieve the set of operations from the storage medium 530 to cause the control node 110 to perform the set of operations. The set of operations may be provided as a set of executable instructions. Thus, the processing circuitry 510 is thereby arranged to execute methods as herein disclosed.

The storage medium 530 may also comprise persistent storage, which, for example, can be any single one or combination of magnetic memory, optical memory, solid state memory or even remotely mounted memory.

The control unit 110 may further comprise a communications interface 520 for communications with external units, such as the control unit 130, the remote server 160, and/or other radar transceivers. As such, the interface 520 may comprise one or more transmitters and receivers, comprising analogue and digital components and a suitable number of ports for wired or wireless communication.

The processing circuitry 510 is adapted to control the general operation of the control node 110 e.g. by sending data and control signals to the interface 520 and the storage medium 530, by receiving data and reports from the interface 520, and by retrieving data and instructions from the storage medium 530. Other components, as well as the related functionality, of the control node 110 are omitted in order not to obscure the concepts presented herein.

Figure 6 shows a computer program product 600 comprising computer executable instructions 610 to execute any of the methods disclosed herein.

## Claims

1. A method for suppressing interference (180) in a radar signal (125) received by a radar transceiver (110) in a vehicle (100), the method comprising;
obtaining (S1) a sequence of time domain samples (310) of the received radar signal (125),
determining (S2) predicted time domain samples (330) of the radar signal based on the obtained sequence of time domain samples (310), and
if interference (180) is detected (S3) in an interfered subset (321, 322) of the sequence of time domain samples (310),
replacing (S4) the interfered subset (321, 322) by corresponding predicted time domain samples (330) to repair the obtained sequence of time domain samples, and
transmitting (S6) a notification to a control unit (130) in the vehicle (100) comprising information related to the replacing.

2. The method according to claim 1, wherein the obtaining comprises obtaining (S11) time domain samples of the received radar signal from an analog to digital converter, ADC, arranged to convert an analog baseband radar signal into discrete time domain samples of the radar signal.

3. The method according to any previous claim, wherein the determining is based on filtering (S21) the obtained sequence of time domain samples (310) by a Finite Impulse Response, FIR, filter defined by a vector of filter weights and/or by a frequency domain filter.

4. The method according to any previous claim, comprising updating (S5) one or more repair statistics related to the replacing.

5. The method according to claim 4, wherein the one or more repair statistics are related to an occurrence frequency of interference detections (S51).

6. The method according to claim 4 or 5, wherein the one or more repair statistics are related to a time duration (S52) of the interfered subset (321, 322).

7. The method according to any of claims 4-6, wherein the one or more repair statistics are related to a prediction error or accuracy (S53) of the predicted time domain samples (330).

8. The method according to any of claims 4-7, wherein transmitting (S6) a notification to the control unit (130) comprises transmitting (S61) the repair statistics to the control unit (130).

9. The method according to any previous claim, wherein the notification comprises an indication (S62) that repair has been performed, and/or information regarding which frequency band and/or center frequency that has been subject to repair in case the radar signal (125) comprises two or more frequency bands and/or center frequencies.

10. The method according to any previous claim, comprising updating (S7) a sensor fusion parameter of the control unit (130) based on the notification, wherein the sensor fusion parameter determines a weighting of sensor data from different sensor systems of the vehicle (100).

11. The method according to any previous claim, comprising associating (S8) a geographical location with the notification.

12. The method according to claim 11, comprising generating (S81) an interference map indicating levels of interference associated with respective physical locations.

13. A radar transceiver (110) arranged to suppress interference in a received radar signal (125), the transceiver comprising an input port arranged to obtain time domain samples of the radar signal, and processing circuitry (510) arranged to perform the methods of any of claims 1-12.

14. A control unit (130) arranged to receive radar detection data from a radar transceiver (110), and processing circuitry (510) arranged to perform the methods of any of claims 1-12.

15. A vehicle (100) comprising the radar transceiver (110) according to claim 13 and the control unit (130) according to claim 14.

## Patentansprüche

1. Verfahren zum Unterdrücken von Störungen (180) in einem Radarsignal (125), das von einem Radar-Transceiver (110) in einem Fahrzeug (100) empfangen wird, wobei das Verfahren Folgendes beinhaltet:
Erhalten (S1) einer Folge von Zeitdomänen-Samples (310) des empfangenen Radarsignals (125),
Bestimmen (S2) vorhergesagter Zeitdomänen-Samples (330) des Radarsignals auf der Basis der erhaltenen Folge von Zeitdomänen-Samples (310), und
wenn eine Störung (180) in einer gestörten Teilmenge (321, 322) der Folge von Zeitdomänen-Samples (310) erkannt wird (S3),
Ersetzen (S4) der gestörten Teilmenge (321, 322) durch entsprechende vorhergesagte Zeitdomänen-Samples (330), um die erhaltene Folge von Zeitdomänen-Samples zu reparieren, und
Übertragen (S6) einer Benachrichtigung zu einer Steuereinheit (130) in dem Fahrzeug (100), die Informationen in Bezug auf das Ersetzen umfasst.

2. Verfahren nach Anspruch 1, wobei das Erhalten das Erhalten (S11) von Zeitdomänen-Samples des empfangenen Radarsignals von einem Analog-Digital-Wandler (ADC) beinhaltet, der zum Umwandeln eines analogen Basisband-Radarsignals in diskrete Zeitdomänen-Samples des Radarsignals ausgelegt ist.

3. Verfahren nach einem vorherigen Anspruch, wobei das Bestimmen auf der Filterung (S21) der erhaltenen Folge von Zeitdomänen-Samples (310) durch ein durch einen Vektor von Filtergewichtungen definiertes FIR-(Finite Impulse Response)-Filter und/oder durch ein Frequenzdomänenfilter basiert.

4. Verfahren nach einem vorherigen Anspruch, das das Aktualisieren (S5) einer oder mehrerer Reparaturstatistiken in Bezug auf das Ersetzen beinhaltet.

5. Verfahren nach Anspruch 4, wobei die ein oder mehreren Reparaturstatistiken mit der Häufigkeit des Auftretens von Störungserfassungen (S51) in Beziehung stehen.

6. Verfahren nach Anspruch 4 oder 5, wobei die ein oder mehreren Reparaturstatistiken mit einer Zeitdauer (S52) der gestörten Teilmenge (321, 322) in Beziehung stehen.

7. Verfahren nach einem der Ansprüche 4-6, wobei sich die ein oder mehreren Reparaturstatistiken auf eine(n) Vorhersagefehler oder -genauigkeit (S53) der vorhergesagten Zeitdomänen-Samples (330) beziehen.

8. Verfahren nach einem der Ansprüche 4-7, wobei das Übertragen (S6) einer Benachrichtigung zu der Steuereinheit (130) das Übertragen (S61) der Reparaturstatistik zu der Steuereinheit (130) beinhaltet.

9. Verfahren nach einem vorherigen Anspruch, wobei die Benachrichtigung eine Anzeige (S62), dass eine Reparatur durchgeführt wurde, und/oder Informationen darüber umfasst, welche(s) Frequenzband und/oder Mittenfrequenz einer Reparatur unterzogen wurde, falls das Radarsignal (125) zwei oder mehr Frequenzbänder und/oder Mittenfrequenzen umfasst.

10. Verfahren nach einem vorherigen Anspruch, das das Aktualisieren (S7) eines Sensorfusionsparameters der Steuereinheit (130) auf der Basis der Benachrichtigung beinhaltet, wobei der Sensorfusionsparameter eine Gewichtung von Sensordaten von verschiedenen Sensorsystemen des Fahrzeugs (100) bestimmt.

11. Verfahren nach einem vorherigen Anspruch, das das Assoziieren (S8) eines geographischen Orts mit der Benachrichtigung beinhaltet.

12. Verfahren nach Anspruch 11, das das Erzeugen (S81) einer Störungskarte beinhaltet, die mit jeweiligen physischen Orten assoziierte Störpegel anzeigt.

13. Radar-Transceiver (110), der zum Unterdrücken von Störungen in einem empfangenen Radarsignal (125) ausgelegt ist, wobei der Transceiver einen Eingangsanschluss umfasst, der zum Erhalten von Zeitdomänen-Samples des Radarsignals ausgelegt ist, sowie eine Verarbeitungsschaltung (510), die zum Durchführen des Verfahrens nach einem der Ansprüche 1-12 ausgelegt ist.

14. Steuereinheit (130), die zum Empfangen von Radarerfassungsdaten von einem Radar-Transceiver (110) ausgelegt ist, und eine Verarbeitungsschaltung (510), die zum Durchführen des Verfahrens nach einem der Ansprüche 1-12 ausgelegt ist.

15. Fahrzeug (100), das den Radar-Transceiver (110) nach Anspruch 13 und die Steuereinheit (130) nach Anspruch 14 umfasst.

## Revendications

1. Procédé de suppression de brouillage (180) dans un signal radar (125) reçu par un émetteur-récepteur radar (110) dans un véhicule (100), le procédé comprenant :
l'obtention (S1) d'une séquence d'échantillons du domaine temporel (310) du signal radar reçu (125),
la détermination (S2) d'échantillons du domaine temporel prédits (330) du signal radar en fonction de la séquence d'échantillons du domaine temporel (310) obtenue, et
si un brouillage (180) est détecté (S3) dans un sous-ensemble brouillé (321, 322) de la séquence d'échantillons du domaine temporel (310),
le remplacement (S4) du sous-ensemble brouillé (321, 322) par des échantillons du domaine temporel prédits (330) correspondants pour réparer la séquence d'échantillons du domaine temporel obtenue, et
la transmission (S6) d'une notification à une unité de commande (130) dans le véhicule (100) comprenant des informations relatives au remplacement.

2. Procédé selon la revendication 1, dans lequel l'obtention comprend l'obtention (S11) d'échantillons du domaine temporel du signal radar reçu à partir d'un convertisseur analogique-numérique, CAN, conçu pour convertir un signal radar en bande de base analogique en échantillons du domaine temporel discrets du signal radar.

3. Procédé selon toute revendication précédente, dans lequel la détermination est basée sur un filtrage (S21) de la séquence d'échantillons du domaine temporel (310) obtenue par un filtre à réponse impulsionnelle finie, FIR, défini par un vecteur de poids de filtre et/ou par un filtre du domaine fréquentiel.

4. Procédé selon toute revendication précédente, comprenant la mise à jour (S5) d'une ou plusieurs statistiques de réparation relatives au remplacement.

5. Procédé selon la revendication 4, dans lequel les une ou plusieurs statistiques de réparation se rapportent à une fréquence d'occurrence de détections de brouillage (S51).

6. Procédé selon la revendication 4 ou 5, dans lequel les une ou plusieurs statistiques de réparation se rapportent à une durée (S 52) du sous-ensemble brouillé (321, 322).

7. Procédé selon l'une quelconque des revendications 4 à 6, dans lequel les une ou plusieurs statistiques de réparation se rapportent à une erreur ou précision de prédiction (S53) des échantillons du domaine temporel prédits (330).

8. Procédé selon l'une quelconque des revendications 4 à 7, dans lequel la transmission (S6) d'une notification à l'unité de commande (130) comprend la transmission (S61) des statistiques de réparation à l'unité de commande (130).

9. Procédé selon toute revendication précédente, dans lequel la notification comprend une indication (S62) qu'une réparation a été effectuée et/ou des informations concernant la bande de fréquence et/ou la fréquence centrale qui a fait l'objet d'une réparation dans le cas où le signal radar (125) comprend deux bandes de fréquences et/ou fréquences centrales ou plus.

10. Procédé selon toute revendication précédente, comprenant la mise à jour (S7) d'un paramètre de fusion de capteurs de l'unité de commande (130) en fonction de la notification, dans lequel le paramètre de fusion de capteurs détermine une pondération de données de capteurs provenant de différents systèmes de capteurs du véhicule (100).

11. Procédé selon toute revendication précédente, comprenant l'association (S8) d'un emplacement géographique à la notification.

12. Procédé selon la revendication 11, comprenant la génération (S81) d'une carte de brouillage indiquant des niveaux de brouillage associés à des emplacements physiques respectifs.

13. Emetteur-récepteur radar (110) conçu pour supprimer un brouillage dans un signal radar reçu (125), l'émetteur-récepteur comprenant un port d'entrée conçu pour obtenir des échantillons du domaine temporel du signal radar, et des circuits de traitement (510) conçus pour réaliser les procédés selon l'une quelconque des revendications 1 à 12.

14. Unité de commande (130) conçue pour recevoir des données de détection radar provenant d'un émetteur-récepteur radar (110), et des circuits de traitement (510) conçus pour réaliser les procédés selon l'une quelconque des revendications 1 à 12.

15. Véhicule (100) comprenant l'émetteur-récepteur radar (110) selon la revendication 13 et l'unité de commande (130) selon la revendication 14.
